(19) Europäisches Patentamt
European Patent Office
Office européen des brevets

(11) **EP 4 244 012 B1**

(12) **EUROPÄISCHE PATENTSCHRIFT**

(45) Veröffentlichungstag und Bekanntmachung des Hinweises auf die Patenterteilung:
**31.01.2024  Patentblatt 2024/05**

(21) Anmeldenummer: **21802321.6**

(22) Anmeldetag: **29.10.2021**

(51) Internationale Patentklassifikation (IPC):
*B23F 23/12* (2006.01)      *B23Q 17/20* (2006.01)
*B23Q 17/09* (2006.01)      *B24B 53/075* (2006.01)
*B24B 53/08* (2006.01)      *B23F 21/02* (2006.01)

(52) Gemeinsame Patentklassifikation (CPC):
**B23F 23/1225; B23F 21/026; G05B 19/042**

(86) Internationale Anmeldenummer:
**PCT/EP2021/080200**

(87) Internationale Veröffentlichungsnummer:
**WO 2022/101038 (19.05.2022 Gazette 2022/20)**

(54) **VERFAHREN ZUM ABRICHTEN EINER MEHRGÄNGIGEN SCHLEIFSCHNECKE FÜR DAS SCHLEIFEN VON VERZAHNUNGEN ODER ÄHNLICHEN PROFILEN**

METHOD FOR DRESSING A MULTI-FLIGHT WORM GRINDING WHEEL FOR GRINDING TEETH OR SIMILAR PROFILES

PROCÉDÉ POUR DRESSER UNE VIS SANS FIN DE RECTIFICATION À PLUSIEURS PAS POUR LA RECTIFICATION DE DENTURES OU DE PROFILS SIMILAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2020  DE 102020129935**

(43) Veröffentlichungstag der Anmeldung:
**20.09.2023  Patentblatt 2023/38**

(73) Patentinhaber: **Kapp Niles GmbH & Co. KG 96450 Coburg (DE)**

(72) Erfinder:
• **GEILERT, Philip**
  **96482 Ahorn (DE)**
• **GÖBEL, Christopher**
  **96482 Ahorn (DE)**
• **SENFTLEBEN, Jan**
  **96484 Meeder (DE)**

(74) Vertreter: **Gosdin, Carstensen & Partner Patentanwälte Partnerschaftgesellschaft mbB Adam-Stegerwald-Straße 6 97422 Schweinfurt (DE)**

(56) Entgegenhaltungen:
WO-A1-2020/193228        DE-A1- 4 413 229
DE-A1-102007 009 359    DE-A1-102014 019 553
DE-A1-102017 121 344    DE-A1-102018 131 915
DE-C1- 19 901 338

**Beschreibung**

Die Erfindung betrifft ein Verfahren gemäß dem Oberbegriff des Anspruchs 1, zum Abrichten einer mehrgängigen Schleifschnecke für das Schleifen von Verzahnungen oder ähnlichen Profilen, das aus dem Dokument DE 10 2018 131 915 A1 bekannt ist. wobei die Schleifschnecke mehrere Schneckengänge aufweist, die mittels eines Abrichtwerkzeugs mit jeweils mindestens einem Abrichthub abgerichtet werden, um der Schleifschnecke ein gewünschtes Profil zu verleihen.

Insbesondere bei der Fertigung von Zahnrädern kommt häufig für das Feinbearbeiten das Schleifen mittels einer Schleifschnecke zum Einsatz. Die Schleifschnecke weist dabei mehrere parallel zueinander verlaufende Schneckengänge auf. Beim Schleifen stehen die Schneckengänge mit der zu schleifenden Verzahnung des Zahnrades im Eingriff.

Entscheidend für die Qualität des herzustellenden Zahnrads ist eine präzise Profilierung der Schleifschnecke. Im Falle einer Schleifschnecke, die abrasives Material in einem abrichtbaren Grundkörper aufweist, wird die Geometrie der Kontaktflächen mit der Verzahnung des Zahnrades durch einen Abrichtvorgang hergestellt. Demgemäß wird die Schleifschnecke in diesem Falle (im Unterschied zu einer Schleifschnecke, die einen Stahl-Grundkörper aufweist, der mit abrasivem Material belegt ist) sowohl vor dem Fertigungsprozess und auch in entsprechenden Fertigungsintervallen abgerichtet, um verschleißbedingte negative Veränderungen des Profils der Schleifschnecke zu eliminieren.

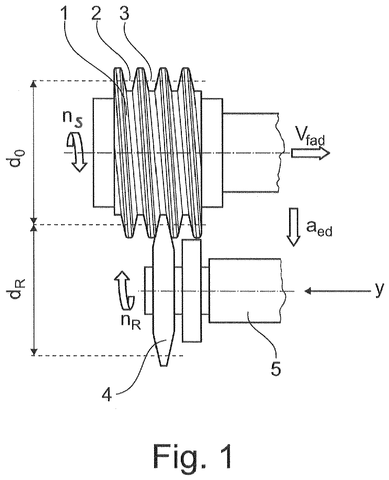

Der Abrichtprozess ist schematisch in Figur 1 illustriert. Dargestellt ist die Schleifschnecke 1, die mehrere Schneckengänge 2, 3 aufweist, die parallel zueinander um die Drehachse der Schleifschnecke 1 verlaufen. Weiterhin ist ein Abrichtwerkzeug 4 zu erkennen, welches auf einer Abrichtspindel 5 montiert ist, die von einem nicht dargestellten Motor angetrieben wird. Dargestellt ist auch ein nicht näher bezeichnetes Abrichtwerkzeug, welches zusammen mit dem Abrichtwerkzeug 4 auf der Abrichtspindel 5 aufgenommen ist und mit dem der Außenumfang der Schleifschnecke 1 (der "Kopfkreis") abgerichtet wird.

Beim Abrichten wird das Abrichtwerkzeug 4 nacheinander durch die einzelnen Schneckengänge 2, 3 der Schleifschnecke 1 geführt, um dieselben zu profilieren. In Figur 1 dargestellt sind die dabei relevanten Parameter, wie der Durchmesser $d_0$ der Schleifschnecke 1, der Durchmesser $d_R$ des Abrichtwerkzeugs 4, die Drehzahl $n_S$ der Schleifschnecke 1 beim Abrichten, die Drehzahl $n_R$ des Abrichtwerkzeugs 4 beim Abrichten, die relative Translationsgeschwindigkeit $v_{fad}$ zwischen der Schleifschnecke 1 und dem Abrichtwerkzeug 4 beim Abrichten und die radiale Zustellung $a_{ed}$, mit der das Abrichtwerkzeug 4 relativ zur Schleifschnecke 1 radial zugestellt wird. Ferner eingetragen ist die Koordinate Y, die den Ort angibt, an dem sich während des Abrichtvorgangs das Abrichtwerkzeug 4 relativ zur Schleifschnecke 1 befindet.

Das Abrichten erfolgt dabei zumeist in mehreren Abrichthüben, wobei zunächst Schrupphübe ausgeführt werden können, um die etwaige Form der Flanken der einzelnen Schneckengänge zu erzeugen, woran sich dann Schlichthübe anschließen, die die endgültige Kontur der Flanken der Schneckengänge erzeugen. Bei den einzelnen Abrichthüben kann so vorgegangen werden, dass in einem Hin-Hub die eine Flanke des Schneckengangs und in einem sich anschließenden Rück-Hub die gegenüberliegende Flanke des Schneckengangs abgerichtet wird. Zwischen dem Hin-Hub und dem Rück-Hub kann dann das Abrichtwerkzeug in Richtung Y geshiftet werden (positives Shiften beim Hin-Hub, negatives Shiften beim Rück-Hub).

Für die Überwachung des Abrichtvorgangs ist es bekannt, insbesondere den Strom des Motors zu überwachen, mit dem die Abrichtspindel angetrieben wird. Der Strom wird aufgezeichnet und sein Verlauf über die Zeit betrachtet. Für diesen Verlauf ist ein zulässiges Intervall definiert, d. h. eine obere und untere Hüllkurve, wobei der Strom innerhalb des Intervalls liegen muss, um von einem ordnungsgemäßen Abrichtvorgang ausgehen zu können.

Durch das kontinuierliche Weiterschleifen und Abrichten der Schleifschnecke nimmt diese im Durchmesser ab. Die Änderungen des Durchmessers oder der Drehzahl zeigt sich auch im Verlauf der Stromaufnahme des Abrichtmotors. Dadurch ist es möglich, die genannte Hüllkurve zu verlassen, obwohl der Abrichtprozess noch völlig normal verlaufen ist. Daher ist es auch bekannt, dies in einer sich ändernden Hüllkurve ("adaptive Hüllkurve") zu berücksichtigen. D. h. im Verlauf der verschiedenen Abrichtvorgänge wird auch die Hüllkurve angepasst.

Eine Problemstellung liegt darin, dass bei einigen Fehlerkonstellationen mit den vorbekannten Maßnahmen nicht zuverlässig auf die Qualität des Abrichtvorgangs geschlossen werden kann. Dies gilt insbesondere im Falle von partiellen Ausbrüchen der Schleifschnecke. Mit den vorbekannten Methoden wird hier gelegentlich bereits auf einen problematischen Abrichtvorgang geschlossen, während die Schleifschnecke noch durchaus, eventuell mit gewissen Einschränkungen, eingesetzt werden kann. So entstehen höhere Werkzeugkosten und auch höhere Kosten bei der Fertigung infolge Werkzeugwechsels.

Die DE 10 2018 131 915 A1 befasst sich mit der Aufgabe, die Qualität einer abrichtbaren Schleifschnecke zu ermitteln. Zu diesem Zweck steht das Abrichtwerkzeug nach Durchführung des Abrichtvorgangs mit der abzurichtenden Schleifschnecke in Kontakt, wobei ein Messen und Auswerten mindestens eines Signals erfolgt, während besagter Kontakt zwischen Abrichtwerkzeug und Schleifschnecke vorliegt. Konkret ist vorgesehen, dass ein Abfahren eines Gangkopfes des Schneckengangs in Anlage mit einem Bereich des Abrichtwerkzeugs erfolgt. Hierbei kontaktiert ein außendurchmesserseitiger Bereich des Abrichtwerkzeugs den Gangkopf der Schleifschnecke. Nach dieser vorbekannten Lösung betroffen ist also eine Prüfung der bereits abgerichteten Schleifschnecke nach Durchführung des Abrichtvorgangs.

Aus der WO 2020/193228 A1 ist es bekannt, während des Schleifvorgangs von Werkstücken mittels einer Schleifschnecke eine Prozesskontrolle durchzuführen. Zu diesem Zweck erfolgt ein Überwachen mindestens einer Messgröße während des Bearbeitens der Werkstücke, wobei vorgesehen ist, dass aus der mindestens einen überwachten Messgröße ein Warnindikator für eine unzulässige Prozessabweichungen ermittelt wird. Hierbei ist insbesondere an die Detektion eines Schleifscheibenausbruchs gedacht.

Der Erfindung liegt die **Aufgabe** zugrunde, ein gattungsgemäßes Verfahren so weiterzuentwickeln, dass es möglich ist, durch eine verbesserte Überwachung des Abrichtprozesses zuverlässigere Aussagen zu gewinnen, ob der Abrichtprozess der Schleifschnecke noch hinreichend war, um die Schnecke verwenden zu können, oder ob weitere Maßnahmen ergriffen werden müssen (nochmaliges Abrichten oder Schneckenwechsel), um das Schleifen von Gut-Teilen sicherzustellen. Somit besteht ein Ziel der vorliegenden Erfindung in einer prozesssicheren Überwachung des Abrichtprozesses.

Die **Lösung** dieser Aufgabe durch die Erfindung sieht vor, dass das Verfahren die Schritte umfasst:

a) Abrichten eines ersten Schneckengangs der Schleifschnecke mit dem Abrichtwerkzeug durch mindestens einen Abrichthub, wobei während des Abrichtvorgangs mindestens ein Prozessparameter gemessen und erfasst wird;

b) Abrichten eines weiteren Schneckengangs der Schleifschnecke, der vom ersten Schneckengang verschieden ist, mit dem Abrichtwerkzeug durch mindestens einen Abrichthub, wobei während des Abrichtvorgangs der Prozessparameter gemessen und erfasst wird;

c) nach dem Abrichten aller Schneckengänge der Schleifschnecke: Zusammenführen der gemessenen und erfassten Daten des mindestens einen Prozessparameters;

d) Vergleich der zusammengeführten Daten des mindestens einen Prozessparameters mit in einer Maschinensteuerung gespeicherten Daten und Prüfung, ob die zusammengeführten Daten innerhalb eines vorgegebenen zulässigen Bereichs liegen;

e) Ausgeben eines Signals, falls die zusammengeführten Daten nicht innerhalb des vorgegebenen zulässigen Bereichs liegen.

Das Abrichten erfolgt bevorzugt in mehreren Abrichthüben, wobei die Datenmessung und Datenerfassung nur für ausgewählte Abrichthübe erfolgt, vorzugsweise nur für den letzten ausgeführten Abrichthub.

Der mindestens eine Prozessparameter wird bevorzugt über dem Weg des Abrichthubs gemessen und erfasst. Zwar ist auch eine Erfassung über die Zeit möglich, allerdings kann bei der Erfassung über den Weg des Abrichthubs eine verbesserte Zuordnung zum Ort an der Schleifschnecke erfolgen, wo sich ein problematischer Bereich befindet.

Der Prozessparameter ist vorzugsweise die Stromstärke eines Antriebsmotors, mit dem eine Abrichtspindel drehangetrieben wird, die das Abrichtwerkzeugs trägt.

Möglich ist es allerdings auch, dass alternativ oder additiv der Prozessparameter die Abrichtarbeit bezogen auf das abgetragene Material der Schleifschnecke ist (gemessen in $J/mm^3$), die bei einem Abrichthub zumindest für einen definierten Abschnitt der Schleifschnecke erforderlich ist. Durch den erfassten Weg, den das Abrichtwerkzeug beim Abrichten relativ zur Schleifschnecke zurücklegt, und die radiale Zustellung des Abrichtwerkzeugs relativ zur Schleifschnecke kann das Volumen des Materials (im $mm^3$) ermittelt werden, welches das Abrichtwerkzeug von der Schleifschnecke im entsprechenden Schneckengang abträgt. Entsprechend kann durch die Stromaufnahme des Motors, der die Abrichtspindel antreibt, und die entsprechende Zeit zum Zurücklegen des genannten Weges die Energie (in J) ermittelt werden und hieraus dann der genannte Quotient (in $J/mm^3$).

Über die Leistungs- bzw. Stromaufnahme der Abrichtspindel kann also für eine definierte Zeit die aufgenommene Energie ermittelt werden, die für das Zerspanen von Material der Schleifschnecke benötigt wird. Unter Berücksichtigung der Geometrie des Abrichtwerkzeugs und der Profilierung des Schneckengangs sowie der Prozessparameter (insbesondere der Zustellung des Abrichtwerkzeugs auf die Schleifschnecke) kann dann das entsprechende zerspante Volumen ermittelt werden. Mit dem genannten Parameter der Zerspanungsenergie pro Volumen wird die Übertragbarkeit zwischen verschiedenen Abrichtprozessen bei unterschiedlichen Schleifschnecken erleichtert.

Weiterhin kann alternativ oder additiv vorgesehen sein, dass der Prozessparameter der Körperschall oder die Schallemission ist, die während eines Abrichthubs von einem Körperschall- oder Akustiksensor erfasst wird.

Das oben genannte Zusammenführen der gemessenen und erfassten Daten des mindestens einen Prozessparameters ist im einfachsten Falle das Addieren der Signale.

Der Vergleich der oben genannten zusammengeführten Daten kann einen Vergleich mit mindestens einem vorgegebenen und gespeicherten Maximal- oder Minimalwert umfassen. In diesem Falle ist insbesondere vorgesehen, dass der Vergleich für einen vorgegebenen Abschnitt der Schleifschnecke erfolgt.

Möglich ist es auch, dass mehrere Prozessparameter berücksichtigt werden; Beispiele hierfür wurden oben genannt.

Aus dem mindestens einen Prozessparameter kann ein Kennwert ermittelt und ausgegeben werden, der den Abrichtprozess der Schleifschnecke charakterisiert. Insofern kann für jede abgerichtete Schleifschnecke ein Kennwert definiert werden, der Aufschluss über den durchgeführten Abrichtprozesses gibt.

Insofern handelt es sich dann um eine indexbasierte Prozessüberwachung. Der Abrichtprozess kann über einen Zahlenwert (Bereich: z. B. 0 bis 100) bewertet werden; "0" bedeutet dann: "keine Auffälligkeiten", "100" bedeutet: "Prozess fehlerhaft - Bearbeitung muss gestoppt werden".

Die Berechnung der Indizes kann mittels einer vorgegebenen Algorithmik erfolgen. Die Eingabe für den Algorithmus können dann Projektdaten aus dem vorliegenden Bearbeitungsauftrag sowie verschiedene Antriebssignale aus der Maschinensteuerung sein, wie insbesondere die Stromaufnahme der Abrichtspindel und der Werkzeugachse, Leistungssignale und Drehzahlen. Weiterhin können Signale einer verbauten Körperschallsensorik und einer fest verbauten Beschleunigungssensorik verwendet werden. Die Abtastraten liegen bevorzugt im Bereich von mehreren hundert Hertz. Die Signale können adaptiv gefiltert werden.

Wenn hier von der Stromaufnahme (I) der Motoren gesprochen wird, ist hier natürlich auch die aufgenommene Leistung (P) der Motoren gemeint, was über die Beziehung

$$P = \bar{p} = \frac{1}{T} \int_{t_0}^{t_0+T} u \cdot i \, \mathrm{d}t$$

bei anliegender Spannung U gegeben ist.

Die Beurteilung kann auch durch Rückgriff auf (in der Maschinesteuerung) gespeicherte Daten und somit eingelernte Erkenntnisse aus früheren Abrichtprozessen erfolgen. Prozessabweichungen (Anomalien) können so verbessert erkannt werden, so dass dem Maschinenbediener ein Warnhinweis gegeben oder der Abrichtprozess abgebrochen werden kann.

Während der Bearbeitung werden gegebenenfalls mehrere steuerungsinterne Signale (d. h. solche, die in der Maschinensteuerung vorhanden sind) und auch steuerungsexterne Signale (beispielsweise erfasst über Sensoren, die Körperschall aufnehmen, die beispielsweise vom Maschinenbett oder vom Hallenboden herrühren) aufgenommen und berücksichtigt.

Zusätzlich können maschineninterne Daten (wie beispielsweise eingestellte Korrekturen, der Durchmesser des Abrichtwerkzeugs und der Schleifschnecke, generierte Bahnen, entlang derer das Abrichtwerkzeug und die Schleifschnecke relativ zueinander geführt werden) verwendet werden, um diese zur Beurteilung des Prozesses zu verwenden, wozu diese gegebenenfalls adaptiv gefiltert und einsortiert werden (beispielsweise durch eine Unterteilung des gesamten Abrichtvorgangs in verschiedene Hübe.

Für eine Allgemeingültigkeit der ermittelten Daten für unterschiedliche Abrichtprozesse und somit für die Übertragbarkeit können die genannten Kennwerte normiert werden.

Mit Hilfe von Algorithmen aus der Statistik und insbesondere mit Algorithmen aus dem Bereich des maschinellen Lernens werden diese Daten ausgewertet und hierdurch die Qualität des Abrichtprozesses bestimmt. Die an sich bekannten Algorithmen aus dem Bereich des maschinellen Lernens beinhalten sowohl überwachtes als auch unüberwachtes Lernen, "Deep Learning" und "bestärkendes Lernen".

Somit wird es möglich, die Überwachungsqualität des Abrichtprozesses zu erhöhen und damit den Abrichtprozess zu stabilisieren. Es kann in verbesserter Weise erkannt werden, ob es sich um einen fehlerhaften Abrichtprozess handelt, wobei auch die Art des Fehlers verbessert identifiziert werden kann. Die Voraussetzung hierfür ist, dass bei den (in der Maschinensteuerung) hinterlegten Daten ein solcher oder ein ähnlicher Fehler eingelernt wurde.

Die vorgeschlagene Vorgehensweise überwacht somit den Abrichtprozess und beurteilt diesen indexbasiert. Das bedeutet, dass für jeden Abrichtprozess ein Index, also ein Zahlenwert berechnet wird, der die Qualität des Abrichtprozesses beurteilt. Diese Indexwerte können dann dem Maschinenbediener als Verlaufsdiagramm zur Verfügung gestellt werden, so dass dieser sich leicht einen Überblick über die jeweils erfolgten Abrichtprozesse machen kann. Zur Ermittlung des genannten Index können mehrere Kennwerte verwendet werden. Diese Kennwerte beurteilen dann auf unterschiedliche Weise den Abrichtprozess. Fehler können somit frühzeitig erkannt werden, die ansonsten erst verspätet oder gar nicht erkannt werden. Hierzu gehören insbesondere Fehler in Form von Ausbrüchen an der Schleifschnecke.

Die im konkreten Abrichtprozess erfassten Daten werden mit solchen verglichen, die in einer Datenbank hinterlegt sind. Somit können beispielsweise bestimmte Prozesssignale bestimmten Bereichen der Schleifschnecke zugeordnet werden; entsprechend können beispielsweise Signale bestimmten Schneckendurchmessern und dazugehörigen Drehzahlen der Schleifschnecke zugeordnet werden.

In der Zeichnung sind Ausführungsbeispiele der Erfindung dargestellt.

Fig. 1    zeigt schematisch eine Schleifschnecke, die mit einem Abrichtwerkzeug abgerichtet wird,

Fig. 2    zeigt schematisch den Verlauf eines Prozessparameters in Form der Abrichtarbeit pro Volumen des von der Schleifschnecke abgetragenen Materials für drei Abrichthübe, wobei der Verlauf beim Abrichten eines ersten Schneckengangs dargestellt ist,

Fig. 3    zeigt schematisch den Verlauf des Prozessparameters gemäß Fig. 2 für zwei Abrichthübe, wobei der Verlauf beim Abrichten eines zweiten Schneckengangs dargestellt ist,

Fig. 4    zeigt schematisch den Verlauf des Prozessparameters gemäß Fig. 2 und Fig. 3 für einen Abrichthub, wobei die Summe der Werte des Prozessparameters dargestellt ist und wobei noch ein akzeptabler Abrichtvorgang der Schleifschnecke ausgeführt wurde,

Fig. 5    zeigt schematisch den Verlauf des Prozessparameters in Form der Abrichtarbeit pro Volumen des von der Schleifschnecke abgetragenen Materials für zwei Abrichthübe, wobei der Verlauf beim Abrichten eines ersten Schneckengangs (mit ausgezogenen Linien) und der Verlauf beim Abrichten eines zweiten Schneckengangs (mit gestrichelten Linien) dargestellt ist, und

Fig. 6    zeigt schematisch den Verlauf des Prozessparameters gemäß Fig. 5 für einen Abrichthub, wobei die Summe der Werte des Prozessparameters dargestellt ist und wobei kein akzeptabler Abrichtvorgang der Schleifschnecke mehr ausgeführt wurde.

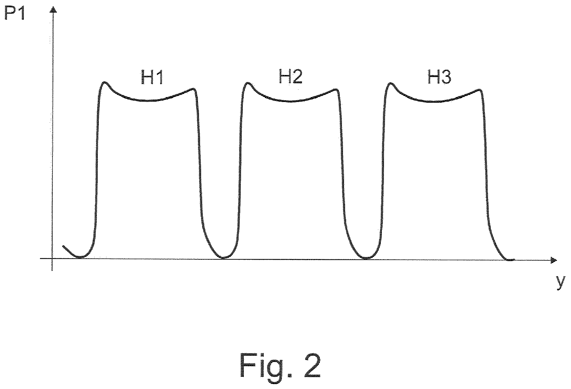

In Figur 2 ist schematisch der Verlauf eines Prozessparameters P1 über dem Weg mehrerer Abrichthübe H1, H2, H3 aufgetragen, der sich beim Abrichten eines ersten Schneckengangs 2 ergibt (s. Figur 1).

Dargestellt ist also das Abrichten des ersten Schneckengangs 2 mit dem Abrichtwerkzeug 4 (s. Figur 1), wobei während des Abrichtvorgangs der Prozessparameter P1 gemessen und erfasst wird.

Bei dem Prozessparameter handelt es sich hier um die Abrichtarbeit bezogen auf das abgetragene Material der Schleifschnecke 1 (deren Einheit beträgt $J/mm^3$), die bei einem Abrichthub H1, H2, H3 zumindest für einen definierten Abschnitt Y der Schleifschnecke 1 erforderlich ist. Zur Klarstellung sei angemerkt, dass hier über der Koordinate Y der Verlauf der Abrichtarbeit für unterschiedliche Abrichthübe H1, H2, H3 aufgetragen ist, wenngleich bei jedem Abrichthub im Regelfall Vor- und Rückwärtsbewegungen vorgesehen werden (Hin-Hub, Rück-Hub) bzw. die Koordinate Y neu durchfahren wird. Erwähnt sei, dass bei gegebener radialer Zustellung des Abrichtwerkzeugs 4 relativ zur Schleifschnecke 1 jedenfalls bei konstanter Verfahr-Geschwindigkeit $v_{fad}$ (s. Figur 1) eine Proportionalität zwischen der Abrichtarbeit und dem aufgenommenen Strom des Motors der Abrichtspindel 5 bzw. der Leistung des Motors besteht.

Wie sich aus Figur 2 ergibt, liegen die Werte des Prozessparameters P1 in einem erwarteten Bereich.

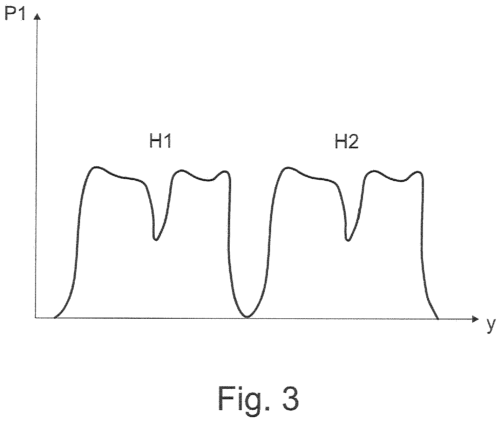

In Figur 3 ist schematisch der Verlauf des Prozessparameters P1 über dem Weg zweier Abrichthübe H1 und H2 aufgetragen, der sich beim Abrichten eines zweiten Schneckengangs 3 ergibt (s. Figur 1).

Dargestellt ist also das Abrichten eines weiteren Schneckengangs 3 mit dem Abrichtwerkzeug 4, wobei während des Abrichtvorgangs wiederum der Prozessparameter P1 gemessen und erfasst wird.

Zu erkennen ist jetzt, dass hier offensichtlich nicht mehr optimale Verhältnisse vorliegen, denn der Verlauf des Prozessparameters P1 weist etwa in der Mitte des oberen Plateaus, auf dem der Prozessparameter P1 typischerweise bei einem Abrichthub liegt, einen Einbruch auf, der auf einen Ausbruch an der Schleifschnecke 1 hinweist.

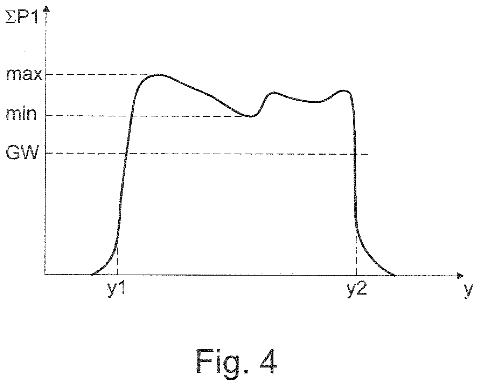

Nachdem sämtliche Schneckengänge abgerichtet wurden, erfolgt ein Zusammenführen der gemessenen und erfassten Daten des Prozessparameters P1. Dies ist in Figur 4 dargestellt. Im vorliegenden Falle wurden die Werte des Prozessparameters P1 aufsummiert, wobei durch gleichzeitige Protokollierung der Koordinate Y eine einfache Zuordnung der einzelnen Abrichthübe in den jeweiligen Schneckengängen 2, 3 erfolgen kann.

In Figur 4 ist zu erkennen, dass sich der relativ starke Einbruch etwa in der Mitte eines Abrichthubs (s. Figur 3) jetzt immer noch bemerkbar macht, allerdings abgeschwächt ausfällt.

Nunmehr erfolgt ein Vergleich der zusammengeführten Daten des Prozessparameters P1 Daten, die in einer nicht dargestellten Maschinensteuerung gespeichert sind, und eine Prüfung, ob die zusammengeführten Daten innerhalb eines vorgegebenen zulässigen Bereichs liegen.

Hierzu sind in Figur 4 zunächst eine Koordinate Y1 und eine Koordinate Y2 angegeben, zwischen denen die Auswertung erfolgt. Demgemäß erfolgt die Betrachtung zwischen definierten Bereichen, die leicht automatisch festgelegt werden können (z. B. durch eine bestimmte Größe des Gradienten, mit dem zu Beginn des Abrichthubs (Koordinate Y1) die in Figur 4 dargestellte Kurve ansteigt, sowie eine bestimmte Größe des Gradienten, mit dem zum Ende des Abrichthubs (Koordinate Y2) die Kurve abfällt).

Für den so definierten Auswertebereich können Maximalwerte "max" und Minimalwerte "min" des Kurvenverlaufs des Prozessparameters automatisch ermittelt werden.

Eingetragen ist in Figur 4 auch ein Grenzwert GW, der vorliegend den gespeicherten minimal erlaubten Wert des Prozessparameters P1 markiert.

Demgemäß kann die Software in der Maschinensteuerung hier leicht erkennen, dass nirgendwo (zwischen den Koordinaten Y1 und Y2) der Grenzwert GW unterschritten wurde und so - trotz eines Ausbruchs an der Schleifschnecke - der Abrichtvorgang noch als ordnungsgemäß beurteilt werden kann.

Es kann beispielsweise in Abhängigkeit der Differenz zwischen den Werten "max" und "min" sowie zur relativen Lage zum Grenzwert GW ein Kennwert berechnet werden, der über die Qualität des Abrichtvorgangs Auskunft gibt. So kann beispielsweise bei einer Form des summierten Verlaufs analog zu Figur 2 ein Kennwert von "100" zugeordnet werden ("optimale Verhältnisse beim Abrichten"), während bei Annäherung des Wertes "min" an den Grenzwert GW Abzüge vom Wert "100" definiert werden, die darauf hinweisen, dass die optimale Bereich verlassen wurde.

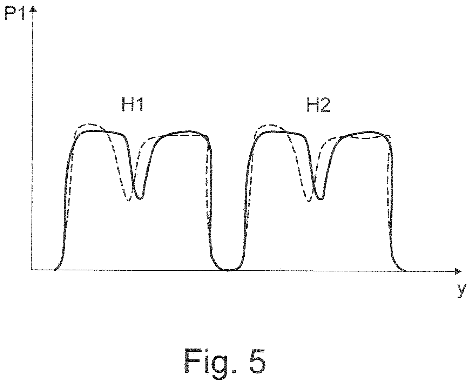

In Figur 5 ist in analoger Weise ein Beispiel illustriert, bei dem die einzelnen Abrichthübe (dargestellt sind zwei Abrichthübe H1 und H2) in den jeweiligen Schneckengängen 2, 3 zu den dargestellten Verläufen des Prozessparameters P1 führten. Mit ausgezogenen Linien ist der Verlauf beim Abrichten des ersten Schneckengangs 2 dargestellt, mit gestrichelten Linien der Verlauf beim Abrichten des zweiten Schneckengangs 3.

Zu erkennen ist jetzt, dass in beiden Schneckengängen 2, 3 etwa in der Mitte des oberen Plateaus jeweils ein Einbruch des Prozessparameters P1 zu verzeichnen ist, was wiederum auf einen Ausbruch in der Schleifschnecke schließen lässt.

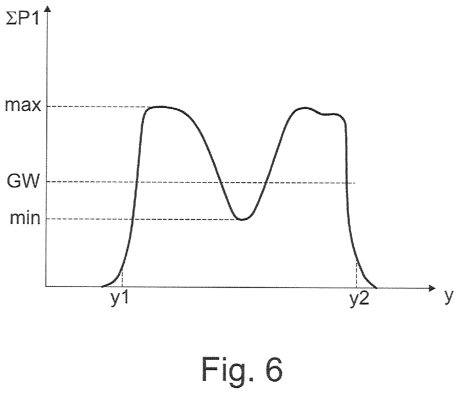

Werden die in den einzelnen Schneckengängen 2, 3 erfassten Werte des Prozessparameters P1 aufsummiert, ergibt sich der Verlauf, wie er in Figur 6 dargestellt ist. Zu erkennen ist hier, dass es einen starken Einbruch der aufsummierten Werte des Prozessparameters P1 im Mittenbereich des oberen Plateaus gibt, so dass auch für diesen Kurvenverlauf eine analoge Auswertung erfolgen kann, wie sie im Zusammenhang mit Figur 4 beschrieben wurde.

Auch hier gibt es nun einen maximalen Wert "max" sowie einen minimalen Wert "min", wobei allerdings nun der minimale Wert "min" unterhalb des Grenzwertes GW liegt und somit darauf hindeutet, dass der Abrichtprozess nicht mehr ordnungsgemäß durchgeführt wurde.

Demgemäß kann jetzt eine Warnung an den Maschinenbediener ausgegeben werden, dass die abgerichtete Schleifschnecke keine ordnungsgemäße Profilierung mehr aufweist und nicht eingesetzt werden kann. Es erfolgt also das Ausgeben eines Signals, dass die zusammengeführten Daten nicht mehr innerhalb des vorgegebenen zulässigen Bereichs liegen.

Wiederum kann natürlich einen Kennwert ermittelt werden, der den aufgetretenen Fehler quantifiziert und somit eine Einschätzung der Maschinensteuerung oder des Maschinenbedieners zulässt, ob trotz nicht optimaler Verhältnisse beim Abrichten der Fertigungsprozess fortgesetzt werden kann bzw. soll.

Durch dieses Vorgehen kann der Abrichtprozess charakterisiert werden: Tritt die Beschädigung nur in einem einzelnen Schneckengang auf, sind die Auswirkungen auf den gesamten Prozess relativ gering. Dies zeigt sich dann auch in dem kombinierten Signal aller Schleifschneckengänge (gemäß Figur 4 bzw. gemäß Figur 6). Bei der Signalkombination werden also mehrere Abrichthübe eines Schneckengangs bzw. mehrere Schneckengänge der Schleifschnecke durch die beschriebene Verrechnung zusammengefasst.

Die Fehlerbilder können somit differenzierter ermittelt werden; namentlich können umlaufende Fehler über mehrere Schneckengänge von einem lokalen Ausbruch innerhalb eines Schneckenganges unterschieden werden. Sind mehrere Schneckengänge beschädigt, wirkt sich dies auch in dem kombinierten Signal aus. Dies kann für die Indexberechnung des Prozesses berücksichtigt werden.

Im Ausführungsbeispiel wurde, wie gesagt, als Prozessparameter P1 die Abrichtarbeit bezogen auf das abgetragene Material der Schleifschnecke 1 herangezogen. Möglich ist es allerdings, dass hier in analoger Weise auch weitere oder andere Prozessparameter betrachtet werden. Geeignet sind alle Parameter, die geeignet sind, den Abrichtvorgang zu charakterisieren.

Insbesondere können Kennwerte herangezogen werden, welche sensitiv gegenüber dem Abrichtprozess sind, wozu auf die obigen Ausführungen Bezug genommen wird (z. B. Erfassung des Körperschalls, der auch Aussagen über den Verlauf des Abrichtprozesses zulässt). Wie dargestellt, können dabei auch nur Abschnitte der erfassten Prozessparameter (vorliegend: die Werte zwischen den Koordinaten Y1 und Y2) herangezogen werden.

Wie auch bereits erwähnt, ist es insbesondere möglich, die Abrichthübe eines Schneckengangs unterschiedlich zu gewichten. Die ersten Schrupphübe können zumeist geringer gewichtet werden als die letzten Schrupphübe und insbesondere die Schlichthübe, die die qualitätsentscheidende Oberfläche der Schleifschnecke erzeugen.

Für die Zuordnung der Werte des Prozessparameters P1 zum aktuellen Ort des Abrichtwerkzeugs relativ zur Schleifschnecke können Drehgeber und Linearmaßstäbe der Maschine verwendet werden. Somit wird es in einfacher Weise möglich, gegebenenfalls vorhandene Fehler an der Schleifschnecke in Abhängigkeit der unterschiedlichen Abrichthübe und Schneckengänge zu betrachten.

Nachdem der Abrichtprozess durch die Berechnung des genannten Index (Kennwert) charakterisiert ist, können bei Überschreitung des Grenzwerts GW verschiedene Meldungen an den Maschinenbediener bzw. Reaktionen erfolgen, wie weiter vorzugehen ist:
Dem Maschinenbediener kann zunächst gemäß einer ersten Möglichkeit die beschädigte Achsposition Y ausgegeben werden. Zusätzlich kann die Maschine die Schleifschnecke automatisiert mit der beschädigten Stelle an eine definierte Position (z. B. vor den Abrichter) fahren, um dem Bediener eine schnelle und effiziente Sichtprüfung zu ermöglichen.

Nach einer zweiten Möglichkeit kann der Maschinenbediener auswählen, ob weiter abgerichtet werden soll, bis der Fehler beseitigt ist (d. h. bis der Index eine vorgegebene Größe erreicht, d. h. der Grenzwert nicht mehr über- oder unterschritten wird). Dabei kann die maximale Anzahl an weiteren Abrichtzyklen begrenzt werden, so dass bei einem eventuellen gravierenden Fehler nicht beliebig weiter abgerichtet wird.

Gemäß einer dritten Möglichkeit kann der Maschinenbediener auswählen bzw. festlegen, ob bzw. dass der beschädigte Bereich (d. h. Erstreckung entlang der Y-Achse) beim Schleifen weiterer Zahnräder übersprungen werden soll bzw. wird.

Gemäß einer weiteren Möglichkeit kann der Maschinenbediener auswählen, ob normal weitergeschliffen werden soll und die Fehlermeldung somit nicht berücksichtigt wird.

Über die vorhandenen Daten (eingestellte Shiftbeträge beim Schleifen) kann zurückverfolgt werden, welches Werkstück an welcher Shift-Position der Schleifschnecke bearbeitet wurde. Damit kann dem Maschinenbediener eine Meldung ausgegeben werden, welche vorherig geschliffenen Teile mit einem geschädigten Bereich geschliffen wurden und somit möglicherweise nicht in Ordnung sein könnten.

**Bezugszeichenliste:**

1    Schleifschnecke
2    Schneckengang
3    Schneckengang
4    Abrichtwerkzeug
5    Abrichtspindel

P1    Prozessparameter

H1    Abrichthub
H2    Abrichthub
H3    Abrichthub

Y    Weg des Abrichthubs

GW    Grenzwert: minimaler erlaubter Wert des Prozessparameters

**Patentansprüche**

1. Verfahren zum Abrichten einer mehrgängigen Schleifschnecke (1) für das Schleifen von Verzahnungen oder ähnlichen Profilen, wobei die Schleifschnecke (1) mehrere Schneckengänge (2, 3) aufweist, die mittels eines Abrichtwerkzeugs (4) mit jeweils mindestens einem Abrichthub (H1, H2, H3) abgerichtet werden, um der Schleifschnecke (1) ein gewünschtes Profil zu verleihen, **dadurch gekennzeichnet, dass**

das Verfahren die Schritte umfasst:

a) Abrichten eines ersten Schneckengangs (2) mit dem Abrichtwerkzeug (4) durch mindestens einen Abrichthub (H1, H2, H3), wobei während des Abrichtvorgangs mindestens ein Prozessparameter (P1) gemessen und erfasst wird;
b) Abrichten eines weiteren Schneckengangs (3), der vom ersten Schneckengang (2) verschieden ist, mit dem Abrichtwerkzeug (4) durch mindestens einen Abrichthub (H1, H2, H3), wobei während des Abrichtvorgangs der Prozessparameter (P1) gemessen und erfasst wird;
c) nach dem Abrichten aller Schneckengänge der Schleifschnecke (1): Zusammenführen der gemessenen und erfassten Daten des mindestens einen Prozessparameters (P1);
d) Vergleich der zusammengeführten Daten des mindestens einen Prozessparameters (P1) mit in einer Maschinensteuerung gespeicherten Daten und Prüfung, ob die zusammengeführten Daten innerhalb eines vorgegebenen zulässigen Bereichs liegen;
e) Ausgeben eines Signals, falls die zusammengeführten Daten nicht innerhalb des vorgegebenen zulässigen Bereichs liegen.

2. Verfahren nach Anspruch 1, **dadurch gekennzeichnet, dass** das Abrichten in mehreren Abrichthüben (H1, H2, H3) erfolgt, wobei die Datenmessung und Datenerfassung nur für ausgewählte Abrichthübe erfolgt, vorzugsweise nur für den letzten ausgeführten Abrichthub.

3. Verfahren nach Anspruch 1 oder 2, **dadurch gekennzeichnet, dass** der mindestens eine Prozessparameter (P1) über dem Weg (Y) des Abrichthubs (H1, H2, H3) gemessen und erfasst wird.

4. Verfahren nach einem der Ansprüche 1 bis 3, **dadurch gekennzeichnet, dass** der Prozessparameter (P1) die Stromstärke eines Antriebsmotors ist, mit dem eine Abrichtspindel (5) drehangetrieben wird, die das Abrichtwerkzeugs (4) trägt.

5. Verfahren nach einem der Ansprüche 1 bis 3, **dadurch gekennzeichnet, dass** der Prozessparameter (P1) die Abrichtarbeit bezogen auf das abgetragene Material der Schleifschnecke (1) ist, die bei einem Abrichthub (H1, H2, H3) zumindest für einen definierten Abschnitt (Y) der Schleifschnecke (1) erforderlich ist.

6. Verfahren nach einem der Ansprüche 1 bis 3, **dadurch gekennzeichnet, dass** der Prozessparameter (P1) der Körperschall oder die Schallemission ist, die während eines Abrichthubs von einem Körperschall- oder Akustiksensor erfasst wird.

**7.** Verfahren nach einem der Ansprüche 1 bis 6, **dadurch gekennzeichnet, dass** das Zusammenführen der gemessenen und erfassten Daten des mindestens einen Prozessparameters (P1) gemäß Schritt c) von Anspruch 1 das Addieren der Signale ist.

**8.** Verfahren nach einem der Ansprüche 1 bis 7, **dadurch gekennzeichnet, dass** der Vergleich der zusammengeführten Daten gemäß Schritt d) von Anspruch 1 einen Vergleich mit mindestens einem vorgegebenen und gespeicherten Maximal- oder Minimalwert (GW) umfasst.

**9.** Verfahren nach Anspruch 8, **dadurch gekennzeichnet, dass** der Vergleich für einen vorgegebenen Abschnitt (Y) der Schleifschnecke (1) erfolgt.

**10.** Verfahren nach einem der Ansprüche 1 bis 9, **dadurch gekennzeichnet, dass** mehrere Prozessparameter (P1) berücksichtigt werden.

**11.** Verfahren nach einem der Ansprüche 1 bis 10, **dadurch gekennzeichnet, dass** aus dem mindestens einen Prozessparameter (P1) ein Kennwert ermittelt und ausgegeben wird, der den Abrichtprozess der Schleifschnecke (1) charakterisiert.

**Claims**

**1.** Method for dressing a multi-thread grinding worm (1) for the grinding of toothings or similar profiles, wherein the grinding worm (1) comprises a plurality of worm threads (2, 3), each of which are dressed by means of a dressing tool (4) with at least one dressing stroke (H1, H2, H3) in order to provide a desired profile to the grinding worm (1),
**characterised in
that** the method comprises the steps:

a) dressing a first worm thread (2) with the dressing tool (4) by at least one dressing stroke (H1, H2, H3), wherein at least one process parameter (P1) is measured and detected during the dressing process;
b) dressing of a further worm thread (3), which is different from the first worm thread (2), with the dressing tool (4) by at least one dressing stroke (H1, H2, H3), wherein the process parameter (P1) is measured and detected during the dressing operation;
c) after dressing all worm threads of the grinding worm (1): combining the measured and recorded data of the at least one process parameter (P1);
d) comparing the combined data of the at least one process parameter (P1) with data stored in a machine controller and checking whether the combined data is within a predetermined admissible range;
e) outputting a signal if the combined data is not within the predefined admissible range.

**2.** Method according to claim 1, **characterised in that** the dressing takes place in several dressing strokes (H1, H2, H3), wherein the data measurement and data acquisition only take place for selected dressing strokes, preferably only for the last executed dressing stroke.

**3.** Method according to claim 1 or 2, **characterised in that** the at least one process parameter (P1) is measured and recorded over the path (Y) of the dressing stroke (H1, H2, H3).

**4.** Method according to one of claims 1 to 3, **characterised in that** the process parameter (P1) is the current of a drive motor with which a dressing spindle (5) carrying the dressing tool (4) is driven in rotation.

**5.** Method according to one of claims 1 to 3, **characterised in that** the process parameter (P1) is the dressing work related to the removed material of the grinding worm (1), which is required for at least a defined section (Y) of the grinding worm (1) during a dressing stroke (H1, H2, H3).

**6.** Method according to one of claims 1 to 3, **characterised in that** the process parameter (P1) is the structure-borne sound or acoustic emission detected by a structure-borne sound or acoustic sensor during a dressing stroke.

**7.** Method according to one of claims 1 to 6, **characterized in that** the combining of the measured and acquired data of the at least one process parameter (P1) according to step c) of claim 1 is the adding of the signals.

**8.** Method according to one of claims 1 to 7, **characterized in that** the comparison of the combined data according to step d) of claim 1 comprises a comparison with at least one predetermined and stored maximum or minimum value (GW).

**9.** Method according to claim 8, **characterised in that** the comparison is made for a predetermined section (Y) of the grinding worm (1).

**10.** Method according to one of claims 1 to 9, **characterised in that** several process parameters (P1) are taken into account.

**11.** Method according to one of claims 1 to 10, **characterised in that** a characteristic value which characterises the dressing process of the grinding worm (1) is determined from the at least one process parameter (P1) and output.

**Revendications**

1. Procédé pour dresser une vis de rectification (1) à plusieurs spires pour la rectification de dentures ou de profils similaires, la vis de rectification (1) présentant plusieurs spires de filetage (2, 3) qui sont dressées au moyen d'un outil de dressage (4) ayant respectivement au moins une course de dressage (H1, H2, H3) afin de conférer à la vis de rectification (1) un profil souhaité,
   **caractérisé en ce que**
   le procédé comprend les étapes suivantes :

   a) dresser une première spire de filetage (2) avec l'outil de dressage (4) par au moins une course de dressage (H1, H2, H3), au moins un paramètre de processus (P1) étant mesuré et enregistré pendant l'opération de dressage ;
   b) dresser une autre spire de filetage (3), qui est différente de la première spire de filetage (2), avec l'outil de dressage (4) par au moins une course de dressage (H1, H2, H3), le paramètre de processus (P1) étant mesuré et enregistré pendant l'opération de dressage ;
   c) après le dressage de toutes les spires de filetage de la vis de rectification (1) : combinaison des données mesurées et enregistrées de l'au moins un paramètre de processus (P1) ;
   d) comparer les données combinées de l'au moins un paramètre de processus (P1) avec des données enregistrées dans une commande de machine et vérifier si les données combinées se situent dans une plage admissible prédéfinie ;
   e) émettre un signal si les données combinées ne se situent pas dans la plage admissible prédéfinie.

2. Procédé selon la revendication 1, **caractérisé en ce que** le dressage est effectué en plusieurs courses de dressage (H1, H2, H3), la mesure et l'acquisition des données n'étant effectuées que pour des courses de dressage sélectionnées, de préférence uniquement pour la dernière course de dressage effectuée.

3. Procédé selon la revendication 1 ou 2, **caractérisé en ce que** l'au moins un paramètre de processus (P1) est mesuré et enregistré sur le trajet (Y) de la course de dressage (H1, H2, H3).

4. Procédé selon l'une des revendications 1 à 3, **caractérisé en ce que** le paramètre de processus (P1) est l'intensité du courant d'un moteur d'entraînement qui entraîne en rotation une broche de dressage (5) qui porte l'outil de dressage (4).

5. Procédé selon l'une des revendications 1 à 3, **caractérisé en ce que** le paramètre de processus (P1) est le travail de dressage basé sur la matière enlevée de la vis de rectification (1), qui est nécessaire pour une course de dressage (H1, H2, H3) au moins pour une section définie (Y) de la vis de rectification (1).

6. Procédé selon l'une des revendications 1 à 3, **caractérisé en ce que** le paramètre de processus (P1) est le bruit de structure ou l'émission sonore qui est détecté(e) par un capteur de bruit de structure ou un capteur acoustique pendant une course de dressage.

7. Procédé selon l'une quelconque des revendications 1 à 6, **caractérisé en ce que** la combinaison des données mesurées et détectées de l'au moins un paramètre de processus (P1) selon l'étape c) de la revendication 1 est l'addition des signaux.

8. Procédé selon l'une des revendications 1 à 7, **caractérisé en ce que** la comparaison des données combinées selon l'étape d) selon la revendication 1 comprend une comparaison avec au moins une valeur maximale ou minimale (GW) prédéterminée et mémorisée.

9. Procédé selon la revendication 8, **caractérisé en ce que** la comparaison est effectuée pour une section (Y) prédéterminée de la vis de rectification (1).

10. Procédé selon l'une des revendications 1 à 9, **caractérisé en ce que** plusieurs paramètres de processus (P1) sont pris en compte.

11. Procédé selon l'une des revendications 1 à 10, **caractérisé en ce qu'**une valeur caractéristique est déterminée et délivrée à partir d'au moins un paramètre de processus (P1), qui caractérise le processus de dressage de la vis de rectification (1).

Fig. 1

Fig. 2

Fig. 3

Fig. 4

Fig. 5

EP 4 244 012 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018131915 A1
- WO 2020193228 A1